# EUROPEAN PATENT APPLICATION

(11) **EP 3 992 886 A1**
(43) Date of publication of application: **04.05.2022**
(21) Application number: 21169641.4
(22) Date of filing: 21.04.2021
(51) Int. Cl.: G06Q 20/20, G06Q 20/32, G06Q 20/34, G06Q 20/40, G07G 1/00

(54) **METHOD AND SYSTEM FOR CONTACTLESS TRANSACTION ATTEMPT DETECTION**

(30) Priority: 27.10.2020 US 202017081528
(71) Applicant: Shopify Inc., Ottawa, ON K2P 2L8 (CA)
(72) Inventor: DeFazio, Michael Joseph, Ottawa, K2P 2L8 (CA)
(74) Representative: Murgitroyd & Company

(57) **Abstract**

A method at a computer system, the method including detecting, utilizing a sensor associated with the computer system, an attempt to establish short-range communications between a device and a short-range communications module coupled to the computer system; determining that no short-range communication was received by the computer system via the short-range communications module; and based on the detecting and determining, performing an action at the computer system.

## Description

### FIELD OF THE DISCLOSURE

The present disclosure is related to tap transactions utilizing short range communication technology, and in particular relates to failure detection for such contactless ("tap") transactions.

### BACKGROUND

Many Point of Sale (POS) terminals now include the ability to receive a contactless ("tap") transaction, which is enabled through near field communications (NFC) technology. During such a transaction, the customer can bring a payment mechanism, such as a credit card, debit card, mobile device, wearable such as a watch or the watch band, jewelry, among other options, into proximity with the NFC reader on the POS terminal. This will energize the antenna and chip within the payment mechanism and allow the POS terminal to receive information about the payment mechanism, as well as a response to a challenge.

In other cases, a tap transaction may be used for other purposes using various short-range wireless technologies. For example, a security transaction to enter a door may involve tapping a card or fob to a Radio Frequency Identification (RFID) reader, which may then issue a challenge to the card or fob and analyze the response to determine whether the user should be granted admission through the door.

### SUMMARY

In some cases, a reader may not receive a response to a transaction message. For example, a payment mechanism may not include an NFC chip if the credit card maker does not add such technology. In other cases, the short-range antenna on the card, fob or other transaction mechanism can be broken. In this case, a typical reader terminal will have no information that a tap transaction was attempted, and will therefore present no failure notification to a user. This can lead to user frustration and delayed transaction time.

The subject-matter of the present application relates to manners in which failed tap transactions may be detected.

In one aspect, a method at a computer system may include detecting, utilizing a sensor associated with the computer system, an attempt to establish short-range communications between a device and a short-range communications module coupled to the computer system; determining that no short-range communication was received by the computer system via the short-range communications module; and based on the detecting and determining, performing an action at the computer system.

In some embodiments, the attempt to establish short-range communications may be detected by the sensor using a sensor signal. The short-range communications may be established via a short-range communications signal distinct from the sensor signal.

In some embodiments, the sensor and the short-range communications module may be distinct components.

In some embodiments, the short-range communications may be enabled by near-field communication (NFC).

In some embodiments, the sensor may be at least one of: an image capture module, a proximity detector, or an accelerometer.

In some embodiments, the step of detecting the attempt to establish short-range communications may comprise detecting an attempt to position the device proximate the short-range communications module.

In some embodiments, the step of detecting the attempt to establish short-range communications may comprise detecting motion towards the computer system, motion away from the computer system, or both motion towards and motion away from the computer system.

In some embodiments, the sensor may be the image capture module and the detecting may be done by capturing an image at the image capture module and processing the image at the computer system.

In some embodiments, the action may comprise providing a transaction failure notification.

In some embodiments, the device may be a payment token and wherein the attempt to establish short-range communications may correspond to an attempt to perform a payment transaction.

In some embodiments, the action may comprise providing a request to use an alternative payment mechanism.

In some embodiments, the action may comprise providing directions to a location of the short-range communications module.

In some embodiments, after a threshold number of attempts to establish short-range communications are detected, the action may comprise requesting use of an alternative payment mechanism.

In some embodiments, the step of detecting the attempt to establish short-range communications may further comprise detecting a type of payment token being used in the transaction attempt, and wherein the action comprises providing, by the computer system, instructions for establishing short-range communications between the payment token, the instructions differing based on the detected type of payment token.

In some embodiments, the action may comprise sending a request to a payment clearinghouse to extend a transaction window.

In a further aspect, a computer system having a processor and a communications subsystem may be configured to: detect, utilizing a sensor associated with the computer system, an attempt to establish short-range communications between a device and a short-range communications module coupled to the computer system; determine that no short-range communication was received by the computer system via the short-range communications module; and based on the detecting and determining, perform an action at the computer system.

In some embodiments, the sensor may be at least one of: an image capture module, a proximity detector, or an accelerometer.

In some embodiments, the computer system may be configured to detect the attempt to establish short-range communications by detecting an attempt to position the device proximate the short-range communications module.

In some embodiments, the computer system may be configured to detect the attempt to establish short-range communications by detecting motion towards the computer system, motion away from the computer system, or both motion towards and motion away from the computer system.

In some embodiments, the sensor may be the image capture module and the computer system may be configured to detect by capturing an image at the image capture module and processing the image at the computer system.

In some embodiments, the action may comprise providing a transaction failure notification.

In some embodiments, the device may be a payment token and wherein the attempt to establish short-range communications may correspond to an attempt to perform a payment transaction.

In some embodiments, the action may comprise providing a request to use an alternative payment mechanism.

In some embodiments, the action may comprise providing directions to a location of the short-range communications module.

In some embodiments, after a threshold number of attempts to establish short-range communications are detected, the action may comprise requesting use of an alternative payment mechanism.

In some embodiments, the computer system may be configured to detect the attempt to establish short-range communications by detecting a type of payment token being used in the transaction attempt, and wherein the action may comprise providing, by the computer system, instructions for establishing short-range communications between the payment token, the instructions differing based on the detected type of payment token.

In some embodiments, the action may comprise sending a request to a payment clearinghouse to extend a transaction window.

In still a further aspect, a computer readable medium for storing instruction code may be provided, the instruction code when executed by a processor of a computer system may cause the computer system to carry out any of the methods described herein.

In still a further aspect, a computer program is provided. The computer program, which when executed on a processor of a computer system, is configured to carry out any of the methods described herein.

Accordingly, there is provided a method, a computer system, and a computer program as detailed in the claims that follow.

### BRIEF DESCRIPTION OF THE DRAWINGS

The present disclosure will be better understood with reference to the drawings, in which:
**Figure 1** is a block diagram showing an example computer system capable of being used with the embodiments of the present disclosure.
**Figure 2** is a block diagram showing a further example computer system capable of being used with the embodiments of the present disclosure.
**Figure 3** is a process diagram showing a method for detecting a transaction attempt and performing an action.

### DETAILED DESCRIPTION

The present disclosure will now be described in detail by describing various illustrative, non-limiting embodiments thereof with reference to the accompanying drawings and exhibits. The disclosure may, however, be embodied in many different forms and should not be construed as being limited to the illustrative embodiments set forth herein. Rather, the embodiments are provided so that this disclosure will be thorough and will fully convey the concept of the disclosure to those skilled in the art.

In accordance with the embodiments of the present disclosure, a computer system associated with a short range communications module, such as a POS terminal, may utilize information from sensors (secondary sensors) outside of the short range communications module to detect that a transaction attempt has been made, while determining that the short range communications module associated with the computer system did not detect a transaction.

Based on/responsive to the detection of the transaction attempt while the short-range communications module associated with the computer system did not detect a transaction, the computer system could perform an action. Various actions may be performed, such as alerting a user that a transaction attempt failed, alerting third party users, providing a user with instructions to perform the transaction in a different way, instructing the user to perform a different type of transaction, among other actions.

In accordance with the embodiments of the present disclosure, various short-range communication terminals could be utilized. In one example, a POS terminal may be used and the transaction that is being attempted is a payment transaction. However, this is not limiting and in other cases other short-range communication modules could be utilized. For example, a security system may have a short-range communication module associated with the door. In a particular example, a radio frequency identification (RFID) reader could be associated with a security system. In this case, the security system may also have another sensor such as, for example, a video camera pointed towards the door, which may be the secondary sensor that is utilized to provide an indication of a transaction attempt.

In other cases, other short-range communication technologies, including but not limited to NFC, RFID, Bluetooth^{™}, Bluetooth Low Energy (BLE), QR or barcode readers, Infrared Data Association (IrDA) readers, among others may be utilized.

### Computer System

Short-range communication modules may have additional sensors associated with such a module/with a device within which they are all integrated. For example, a POS terminal may be built on a reference computing device such as a mobile platform and have access to sensors such as a camera, a positional sensor such as an IR sensor, an accelerometer, among other options.

In other cases, the short-range communication module may be associated with a computing device such as a mobile device. For example, a payment terminal can be added to a mobile device, in some cases using a USB port or a Bluetooth^{™} chipset on the mobile device. In this case, the POS terminal may have access to the mobile device sensors.

In other cases, an RFID reader or similar sensor may be connected via wired or wireless means to a server or computing device.

In other cases, a short-range communications module may consist merely of a reader and other sensors may be associated with another computing device.

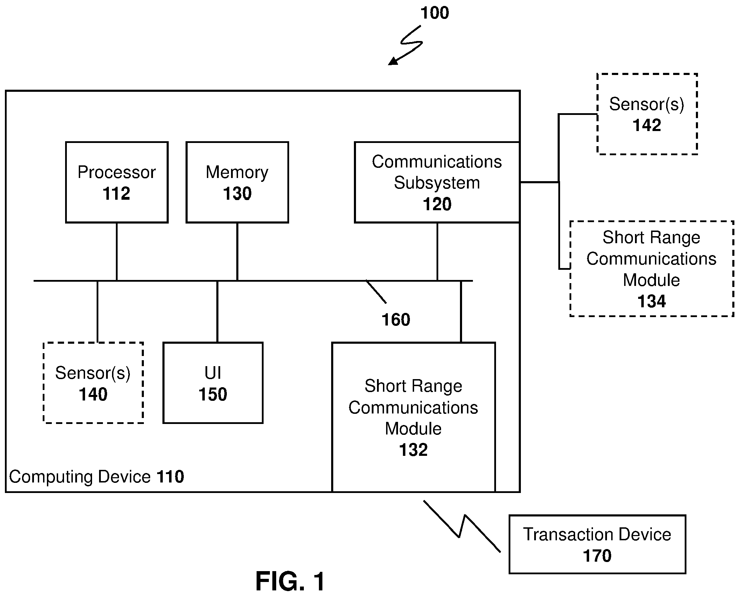

Therefore, reference is now made to **Figure 1****,** which shows an example, simplified, computing system **100.** In the example of **Figure 1****,** a computing device **110** may include a processor **112** and a communications subsystem **120,** where the processor **112** and the communications subsystem **120** cooperate to perform the methods of the embodiments described herein.

Processor **112** is a hardware processor configured to execute programmable logic, which may be stored, along with data, on computing device **110** and shown in the example of **Figure 1** as memory **130.** Memory **130** can be any tangible, non-transitory computer readable storage medium such as optical (e.g., CD, DVD, etc.), magnetic (e.g., tape), flash drive, hard drive, or other memory known in the art.

Alternatively, or in addition to memory **120,** computing device **110** may access data or programmable logic from an external storage medium, for example through communications subsystem **120.**

Communications subsystem **120** allows computing device **110** to communicate with other devices or network elements and the design of communications subsystem **120** may be based on various types of communications being performed. Further, communications subsystem **120** may comprise a plurality of communication technologies, including any wired or wireless communication technology.

In the embodiment of **Figure 1****,** computing device **110** may include a short-range communications module **132.** For example, computing device **110**may consist of a point-of-sale terminal NFC reader, an RFID reader, among other options. In the example of **Figure 1****,** short-range communications module **132** is internal to computing device **110.** However, in other embodiments, the short-range communications module may be external to the computing device **110.** For example, in the case that the short-range communications module is an add-on to the computing device **110,** the short-range communications module may be external and may communicate through communications subsystem **120.** This is shown in the embodiment of **Figure 1** as short-range communications module **134.**

Further, other sensors may be associated with the computing device **110.** Such sensors may be internal sensors, shown as sensors **140** in the embodiment of **Figure 1****.** In other cases, the sensors may be external and are shown as sensors **142** in the embodiment of **Figure 1****.** In certain circumstances, a combination of internal and external sensors may also be used with computing device **110** within computer system **100.**

Sensors **140** or **142** may consist of various sensors that can be used to analyse whether a transaction attempt has been made. For example, in some cases, the sensors may comprise cameras or other image capture modules. In other cases, sensors may include proximity modules such as an IR detector, RADAR, LIDAR, among others. In still other situations, the sensors may include motion sensors such as passive infrared (PIR), microwave, ultrasonic, tomographic motion detectors, gesture detectors, among other options. In other cases, the sensors can include bump sensors such as accelerometers, pressure sensors, among others. In various circumstances, a plurality of sensors may exist and be associated with the computing system. Thus, a combination of the various types of sensors may be available within the computing system.

In the embodiment of **Figure 1****,** computing device **110** further includes a user interface (Ul) **150.** The user interface **150** can be any auditory, visual or a haptic feedback mechanism to provide a user with information. For example, user interface **150** could be a display screen, light, speaker, vibration mechanism, among other options.

However, in some cases, in addition to or rather than, the user interface **150** being associated with computing device **110,** a user interface could be associated with an external short-range communications module **134.** For example, on an RFID door reader, the user interface may be a light that turns green when entrance is permitted and red when a transaction failure detection is made.

Communications between the various modules within a computing device can be done in a variety of ways. In the example of **Figure 1****,** a bus **160** is shown to allow communications between the various modules. However, this is merely provided for illustration purposes and other types of communication between modules is possible.

In operation, a transaction device **170** may be brought into proximity with the short-range communications module **132** in order to have information stored on, or derived by, transaction device **170** transmitted to the short-range communications module **130.** For example, transaction device **170** may be any payment token such as a credit card with a near field communications antenna thereon. The short-range communications module **132** may be an NFC reader. In this case, when the transaction device **170** is brought into proximity of the short-range communications module **132,** energy from the short-range communications module **132** will energize the NFC antenna on the transaction device **170.** In this case, the transaction device **170** will provide information back to the short-range communications module, including information on the device, as well as potentially a response to a challenge that is issued by the short-range communications module **132.**

In other embodiments, transaction device **170** may be a different type of fob. For example, the transaction device **170** may be a watch, watchband, mobile device such as a smart phone, jewelry, among other such devices as may be equipped with short-range communications hardware (e.g., an NFC transceiver).

In other cases, short range communications module **132** may be an RFID reader and the transaction device may be a card or fob with the corresponding RFID technology. In this case, the short-range communications module **132** may issue a challenge to the transaction device **170** which will then be responded to from the transaction device **170.** The short-range communications module **132** can then compare the results from the challenge with the expected results in order to determine whether to accept the transaction or not.

In still further cases, transaction device **170** may be a passive device such as a barcode or a QR code. For example, short range communications module **132** may be a price checking barcode reader mounted in a store and transaction device **170** may be a tag on an item for sale. If the user is not orienting the barcode correctly this may result in the transaction not being recognized.

In still further cases, transaction device **170** can be any short-range communications device capable of interacting with the short-range communications module **130.**

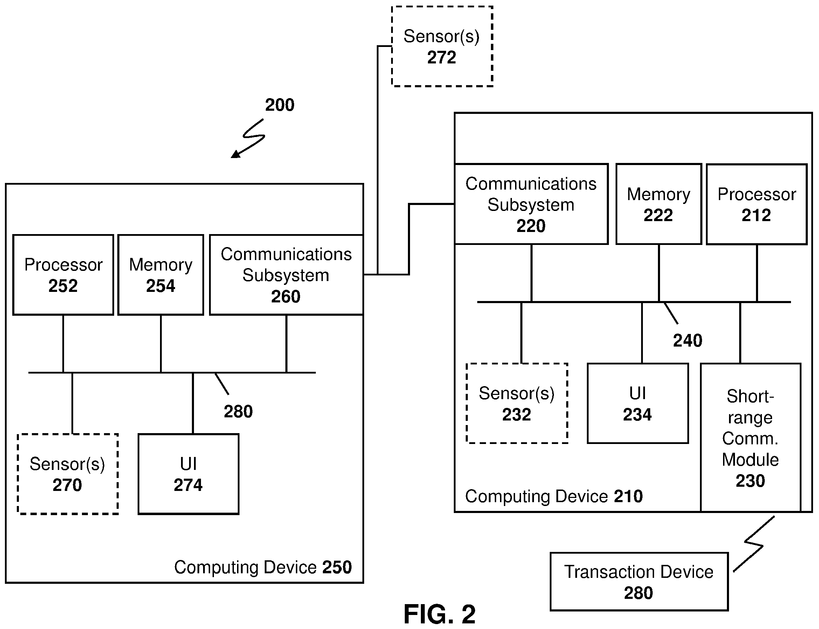

While the embodiment of **Figure 1** shows a single computing device with internal or external sensors and/or internal or external short-range communications modules, in other cases, a plurality of computing devices may exist within a computer system. Reference is now made to **Figure 2****.**

In the example of **Figure 2****,** a simplified computing system **200** having a first computing device **210** and a second computing device **250** is shown. In particular a computing device **210** may be associated with a short-range communications module and be similar to computing device **110** from **Figure 1****.** Computing device **210** includes a processor **212** and a communications subsystem **220,** where the processor **212** and the communications subsystem **220** cooperate to perform the methods of the embodiments described herein.

Processor **212** is a hardware processor configured to execute programmable logic, which may be stored, along with data, on computing device **210** and shown in the example of **Figure 2** as memory **222.** Memory **222** can be any tangible, non-transitory computer readable storage medium such as optical (e.g., CD, DVD, etc.), magnetic (e.g., tape), flash drive, hard drive, or other memory known in the art.

Alternatively, or in addition to memory **222,** computing device **210** may access data or programmable logic from an external storage medium, for example through communications subsystem **220.**

Communications subsystem **220** allows computing device **210** to communicate with other devices or network elements and the design of communications subsystem **220** may be based on various types of communications being performed. Further, communications subsystem **220** may comprise a plurality of communication technologies, including any wired or wireless communication technology.

In the embodiment of **Figure 2****,** computing device **220** may have a short-range communications module **230.** For example, this may consist of a point-of-sale terminal NFC reader, an RFID reader, among other options. In the example of **Figure 2****,** short-range communications module **230** is internal to computing device **210.** However, in other embodiments, the short-range communications module may be external to the computing device **210.**

Further, other sensors may be associated with the computing device **210.** Such sensors may be internal sensors, shown as sensors **232** in the embodiment of **Figure 2****.** In other cases, the sensors may be external to the computing device. In certain circumstances, a combination of internal and external sensors may also be used with computing device **210.**

Sensors **232** may consist of various sensors that can be used to analyse whether a transaction attempt has been made. For example, in some cases, the sensors may comprise cameras or other image capture modules. In other cases, sensors may include proximity modules such as an IR detector, RADAR, LIDAR, among others. In still other situations, the sensors may include motion sensors such as passive infrared (PIR), microwave, ultrasonic, tomographic motion detectors, gesture detectors, among other options. In other cases, the sensors can include bump sensors such as accelerometers, pressure sensors, among others. In various circumstances, a plurality of sensors may exist and be associated with the computing system. Thus, a combination of the various types of sensors may be available within the computing system.

In the embodiment of **Figure 2****,** computing device **210** further may include a user interface (UI) **234.** The user interface **234** can be any auditory, visual or a haptic feedback mechanism to provide a user with information. For example, user interface **234** could be a display screen, light, speaker, vibration mechanism, among other options. However, in some cases, user interface **234** is optional.

Communications between the various modules within computing device can be done in a plurality of ways. In the example of **Figure 2****,** a bus **240** is shown to allow communications between the various modules. However, this is merely provided for illustration purposes and other types of communication between modules is possible.

Further, in the embodiment of **Figure 2****,** a second computing device **250** is provided. Computing device **250** may be an external computing device that is somehow associated with the computing device **210.** For example, computing device **250** may be a computing device for an operator, including a mobile device or tablet that is somehow associated with a stand-alone point-of-sale terminal. In other examples, computing device **250** may be a network server that is used to perform the processing or is provided as a backend for a particular computing system. For example, in some cases, computing device **250** may be used to perform image processing. In other cases, computing device **250** may be a security system computing device associated with security staff. Other examples are possible.

**As** with computing device **210,** computing device **250** may include a processor **252** and a communications subsystem **260,** where the processor **252** and communications subsystem **260** cooperate to perform the methods of the present disclosure.

Processor **252** may use programmable logic to execute instructions stored in a memory **254.** Further memory **254** may store other data and may be any non-transitory computer storage medium.

In some embodiments, such sensors may be similar to sensors **140** or sensors **142** from the embodiment of **Figure 1****.**

Further, in some cases computing device **250** may include a user interface **274** which may be used to provide visual, auditory or haptic feedback to a user of computing device **250.** In this case, the user of computing device **250** may be different from the user trying to complete the transaction. For example, in some cases the user of computing device **250** may be a security staff member for a building that may receive information that an individual is unsuccessfully attempting to gain access to a door. Other examples are possible.

In the embodiment of **Figure 2****,** communications between various modules are provided using bus **280.** Again, communications between modules can be done in a variety of ways and this is merely provided for illustration.

Communications between computing device **210** and computing device **250** may occur through various mechanisms. For example, communications subsystem **220** may communicate with communications subsystem **260** through a wired or wireless connection such as ethernet, Bluetooth, Wi-Fi, USB, other serial port, among others. In other cases, communications subsystem **220** may communicate through a network such as, for example, the Internet, among other similar options, with communications subsystem **260.** In this case, each of communications subsystems **220** and **260** may use wired or wireless communications to communicate with a router which may then route the communications over such a network. Such communications may include but are not limited to cellular, satellite, Wi-Fi, among others.

In operation, a transaction device **280** such as a payment token, card, fob, among others may be brought into proximity of the short-range communications module **230** in order to have information stored on, or derived by, transaction device **280** transmitted to the short-range communications module **230.** Transaction device **280** may be any of the transaction devices described with regards to transaction device **170** of **Figure 1****.**

Therefore, in one example transaction, if computing device **210** is a point-of-sale terminal, once transaction device **280** is brought into proximity with the point-of-sale terminal, the sensors **232, 270** and/or sensors **272** may detect a transaction attempt. However, short range communications module **232** may not detect a transaction attempt. In this case, the processor may utilize communication subsystem **220** to send the raw images to computing device **250,** which may then use processor **252** to perform image processing or object detection to characterize the transaction attempt. Results may then be sent, utilizing communications subsystem **260** back to the computing device **210** which may then, in accordance with the embodiments described below, utilize processor **212** to perform an action.

In a second example transaction, computing device **210** may be a key fob monitoring system for a door or doors in a facility. Computing device **250** may be a general security system associated with a company and may or may not be located in the same location as computing device **210.** In this case, the short-range communication module **230** is an RFID reader and the transaction device is a card or fob. Sensors **232** may include proximity sensors which may detect that something is being brought into proximity with the RFID reader. However, in this case, if no transaction is detected then processor **212** may provide this information utilizing communications subsystem **220** to computing device **250.** Computing device **250** may then, for example, obtain more information through sensors **270** which may include security cameras within the vicinity of the door on which the transaction attempt has been made. Information may be processed by processor **252** and instructions may, for example, be provided back through the communications subsystem **260** to computing device **210** to perform a particular action.

Other options are possible.

In some cases, the embodiments of **Figure 1** of **Figure 2** could be combined, or more or fewer computing devices could be included in a computer system. The present disclosure is not limited to the embodiments of **Figures 1** and **2****,** which are provided to illustrate examples of various computing systems.

### Detecting Transaction Attempts

Utilizing a computer system such as those described above with regard to **Figures 1** and **2****,** secondary sensors can be used to determine whether or not a transaction attempt has been attempted, even when the short range communications module does not receive any input. Such detection can be used to assist the user during a transaction, alert the user that a transaction was unsuccessful, alert third parties, among other actions.

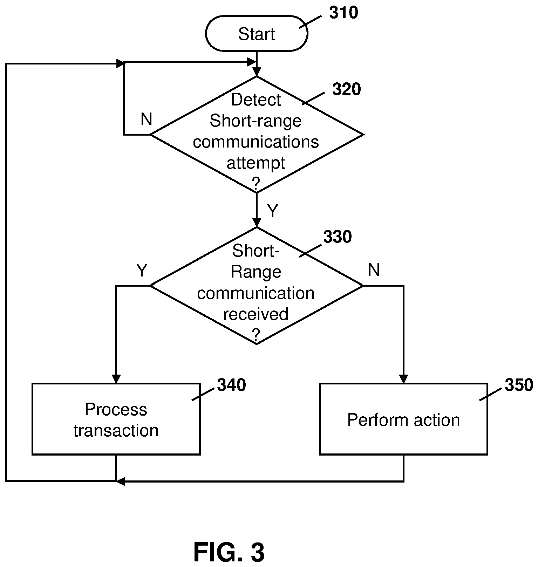

Reference is now made to **Figure 3****.** In the embodiment of **Figure 3** the process starts at block **310** and proceeds to block **320** in which a check is made to determine whether a short-range communication attempt is detected. The detection at block **320** utilizes sensors other than the short-range communications sensor.

For example, in a payment transaction utilizing a mobile device and an NFC reader, front facing cameras can use object recognition to determine when a credit card is being moved in front of the display indicating a payment attempt. In some cases, the cameras and image processing may also detect the withdrawal of the card away from the front of the display and back towards a user, further providing proof that a transaction attempt was made. Therefore, in some embodiments the camera could detect the motion of the credit card both towards the NFC reader and also away from the reader.

In other cases, security cameras in a hallway and image processing at a computer system may detect a user approach a door and then attempt to swipe a card or fob on an RFID reader. In this way, an indication of an attempt to unlock the door may be detected. Notably, the attempt may be detected even if the RFID reader does not detect the attempt/receive any transmission from the security card/fob (e.g. due to a detective card/fob).

In other cases, Infrared (IR) or proximity sensors could be used to detect the proximity of a payment object (such as a credit card, mobile device, watch, watch band, jewelry, etc.) and a computer system can then detect that a payment transaction attempt has been made. Notably, in this way, a transaction attempt may be detected despite (e.g., even if) a wireless receiver (e.g., an NFC payment reader) does not receive any signal from the payment object.

In other cases, accelerometers or pressure sensors associated with the short-range communications module could detect movement or interaction with the module, and equate such movement as having a similar profile to a payment transaction attempt.

In other cases, microphones could detect the sound of the tap of a payment object against a display or NFC reader, and equate such sound with a transaction attempt. Notably, in this way, a transaction attempt may be detected despite (e.g., even if) a wireless receiver (e.g., an NFC payment reader) does not receive any signal from the payment object.

The detection of the short-range communication attempt by the processor of the computer system could utilize a variety of techniques. In some cases, the mere detection of an object would indicate a transaction attempt. Thus, the determination is a binary determination of whether the object is detected or not.

In other cases, the detection of the object could be a motion profile which may be compared with stored motion profiles in a database of the computer system.

In other cases, machine learning can be used to train a decision engine of a neural network using typical transaction attempts. Once a sensor detects an object, the decision engine could then determine whether a transaction attempt is ongoing.

In some cases, processing algorithms could define a confidence/probability that a transaction attempt is detected based on sensor readings and a threshold confidence/probability may be needed to positively detect the short-range communication attempt. For example, there may be a greater confidence depending on the clarity of a camera reading and whether the action is consistent with a transaction attempt. If a camera angle is blocked or partially blocked, this may for example lower the confidence/probability score. Additionally or alternatively, confidence may be higher if a sensor that is considered more reliable in detecting transaction attempts detects signals consistent therewith. Additionally or alternatively, analysis of the output of a given sensor may detect a transaction attempt with some confidence depending on the nature of the signal.

The confidence threshold, in some cases, may be configurable, for example by a system administrator or owner of a system.

Further, if multiple perceived transaction attempts are detected, this could further increase the confidence/probability that a threshold attempt is detected.

Other types of algorithms are also possible.

If a plurality of sensors is available to the computer system, then a correlation between the different sensors could be used to make the determination of whether a short-range communications attempt was detected at block **320.** In this case, processing algorithms could define a confidence/probability that a transaction attempt is detected based on the sensors and a threshold confidence/probability may be needed to positively detect the short-range communication attempt. For example, there may be a greater confidence if a greater number of sensors detect signals consistent with a transaction attempt. Additionally or alternatively, confidence may be higher if one or more sensors considered more reliable in detecting transaction attempts detect signals consistent therewith. Additionally or alternatively, analysis of the output of a given sensor may detect a transaction attempt with some confidence depending on the nature of the signal. For example, where analysis of captured images is employed in detecting a transaction attempt, the confidence in there having been an attempt may vary based on the proximity of "transaction-like" movements (i.e., movements consistent with a transaction attempt such as by a user) to a reader.

The above examples of detection algorithms are by way of example only. Other detection algorithms are possible without departing from the subject matter of the present disclosure.

From block **320,** if no short-range communication attempt is detected, the process continues to loop back to block **320** to continue to monitor for a short-range communication attempt detection.

Once a short-range communication attempt is detected at block **320,** the process proceeds to block **330** in which a check is made to determine whether a short-range communication was received, as detected by the short range communication module. Thus, in a payment transaction, the NFC reader could determine whether an NFC communication was received at the NFC reader. For an RFID transaction, the RFID reader could determine if the RFID communication was received. Similarly, other short-range communications techniques could be detected at the short-range communication module.

From block **330,** if a short-range communication was received, this indicates that a transaction is being attempted and the process may proceed to block **340** in which the transaction may be processed in standard ways. For example, if the transaction is a payment transaction, the credit card information, along with the challenge response, can be processed and a communications path established between the computer system and a transaction clearinghouse to determine whether the funds will be transferred. For an RFID transaction, the response to a challenge can be compared with the expected response and if the two match, a door may be unlocked. In other cases, other types of transactions utilizing short range communications could be enabled based on whether the standard validation for such transaction exists.

Conversely, if no short-range communication was received by the short-range communication module, as determined at block **330,** then the process proceeds to block **350** in which an action may be performed.

The action that is performed may be specific to the type of transaction that is being attempted. For example, in a payment transaction, in one case the action may simply be displaying on a display of the POS terminal an error message. For example, the message may be "Card Not Detected", or a similar message. This provides feedback to the customer that the transaction did not succeed and can allow the customer to make an alternative payment attempt, including, for example, using a different mechanism for payment with the same card/payment object such as swiping a magnetic strip or inserting a chip card in some cases, or using a different card/payment object in other cases.

In other cases, a message at the user interface of the computer system may affirmatively provide a customer with directions to use a different transaction mechanism, such as for example instructions to use a swipe reader or to insert the card into a contact reader.

In other cases, the action may be an audible signal, rather than, or in addition to, a visual message. For example, the audible signal could use a speaker associated with the POS terminal to either synthesize a voice or play a voice file indicating a transaction was not successful. In other cases, the audible signal can be any tone or noise distinct from the successful transaction noise that could indicate to the customer that the transaction was unsuccessful.

In other cases, the action may include haptic feedback, such as a vibration, to indicate an unsuccessful transaction attempt.

In other cases, the action may be a combination of the feedback mechanisms.

In other cases, the message displayed or played to a customer could be used to assist the customer to complete the transaction. For example, in some cases, the NFC reader may be located above the screen or in a different location, and if the customer is trying to tap a payment object to the screen this may lead to an unsuccessful transaction. Therefore, the message may be *"The Tap Pad is above this Screen",* or a similar message.

In other cases, if the screen is large, a square or target can be displayed on the screen to indicate the location to focus the tap. For example, a message may be "Please tap your card on the square below". Other messages used to assist a customer are possible.

In other cases, the sensor may detect the type of payment object, and use this information to assist the customer. For example, the payment object may be a credit card that is oriented incorrectly for the tap transaction and the message may be to re-orient the card. In other cases, the payment object may be a mobile phone or wearable with a payment application, and the message may be that a different part of the phone or wearable needs to be brought into proximity with the NFC reader. Such scenario may use image processing to determine the type, orientation, speed, or other aspect of the payment object and use this data to provide the feedback. Other options are possible.

In other cases, as discussed above, the subject matter of the present application may be employed in relation to a door entry reader. In such cases, the transaction may be an attempt to open a door. In this case, the action may be to provide feedback to a user that the card they are attempting to use is broken and to see the security desk for a new card.

In other cases, the action may be to inform security that a transaction attempt is occurring without successfully reading the card in order to alert security and potentially have security intervene.

Furthermore, the action at block **350** could be a progressive action. Specifically, an initial action may be to provide assistance messages to a user. However, after a threshold number of detected attempts the computer system can signal to a user to use an alternative transaction mechanism or alert a third party, among other actions.

Further, multiple progressive actions could be taken. For example, during the first two detected transaction attempts, a message may simply be displayed the "Card not Detected". After this, a message may be displayed to "Please try inserting or swiping your card". If two more tap transaction attempts are made, a message may be provided to a third party such as the sales clerk, on a computing device associated with the sales clerk, to intervene in the transaction. Other options are possible.

In some cases, the use of the secondary sensors to detect the transaction attempt can also be used to speed up the transaction. For example, in a payment transaction, the intent of payment can be registered, and the action may be that a POS terminal establishes a connection with a payment clearinghouse and pre-negotiates up to date credentials to ensure an active connection exists with the payment network to resolve the payment. Further, in some cases the action may include that the time limit to provide such credentials can be increased to provide a longer window to complete the transaction.

From block **340** or block **350,** the process proceeds to block **320** to continue to detect short range communication attempts.

Based on the above, a computer system can use sensors other than a short-range communications sensor to detect a transaction attempt which is not registering with the short-range communications module. Based on such detection, the computer system can then provide feedback to the user attempting the transaction to indicate that the transaction attempt has been detected but the transaction has failed in order to allow the user to use alternative transaction mechanisms, report to a security desk, reorient the transaction mechanism, among other options. This may reduce user frustration with the system and/or speed of transactions. In other cases, it could act as a trigger for signaling a third-party to intervene such as, for example, to alert security that a transaction is being attempted that may not be authorized. In other cases, an unsuccessful transaction attempt may be logged for monitoring such as, for example, monitoring intended to assist in deriving better systems for performing such transactions in the future.

While the embodiments above describe a short-range communications module and secondary sensors as being distinct, in some embodiments the short-range communications module and secondary sensors may be part of the same physical component. It should be noted that the secondary sensors and the short-range communications module may be distinct in that they use functionally distinct signals. For example, the short-range communications module may establish short-range communications with a transaction device via a dedicated communications signal. The communications signal may be based on various types of communication technologies or protocols provided that they support short-range communication with a transaction device. Short-range communications technologies, including but not limited to NFC, RFID, Bluetooth^{™}, Bluetooth Low Energy (BLE), QR or barcode readers, Infrared Data Association (IrDA) readers, among others may be utilized. The secondary sensors may detect an attempt to establish such short-range communications using a dedicated sensor signal. The sensor signal may be based on various sensing technologies provided that they allow the secondary sensors to detect and analyse whether a transaction attempt has been made. The secondary sensors and the short-range communications module may also be distinct in that the secondary sensors and the short-range communications module are physically distinct components. The present disclosure is thus not limited to any particular configuration for the short-range communications module and the secondary sensors.

The elements described and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps thereof, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions.

Thus, in one aspect, each method described above, and combinations thereof may be embodied in computer executable code that, when executing on one or more computing devices, performs the steps thereof. In another aspect, the methods may be embodied in systems that perform the steps thereof and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

The present teaching may also extend to the features of one or more of the following numbered clauses:

### CLAUSES

1. A method at a computer system, the method comprising:
   detecting, utilizing a sensor associated with the computer system, an attempt to establish short-range communications between a device and a short-range communications module coupled to the computer system;
   determining that no short-range communication was received by the computer system via the short-range communications module; and
   based on the detecting and determining, performing an action at the computer system.
2. The method of clause 1, wherein the sensor is at least one of: an image capture module, a proximity detector, or an accelerometer.
3. The method of clause 2, wherein detecting the attempt to establish short-range communications comprises detecting an attempt to position the device proximate the short-range communications module.
4. The method of clause 2, wherein the detecting the attempt to establish short-range communications comprises detecting motion towards the computer system, motion away from the computer system, or both motion towards and motion away from the computer system.
5. The method of clause 4, wherein the sensor is the image capture module and the detecting is done by capturing an image at the image capture module and processing the image at the computer system.
6. The method of clause 1, wherein the action comprises providing a transaction failure notification.
7. The method of clause 1, wherein the device is a payment token and wherein the attempt to establish short-range communications corresponds to an attempt to perform a payment transaction.
8. The method of clause 7, wherein the action comprises providing a request to use an alternative payment mechanism.
9. The method of clause 1, wherein the action comprises providing directions to a location of the short-range communications module.
10. The method of clause 7, wherein after a threshold number of attempts to establish short-range communications are detected, the action comprises requesting use of an alternative payment mechanism.
11. The method of clause 7, wherein the detecting the attempt to establish short-range communications further comprises detecting a type of payment token being used in the transaction attempt, and wherein the action comprises providing, by the computer system, instructions for establishing short-range communications between the payment token, the instructions differing based on the detected type of payment token.
12. The method of clause 1, wherein the action comprises sending a request to a payment clearinghouse to extend a transaction window.
13. A computer system comprising:
   a processor; and
   a communications subsystem,
   wherein the computer system is configured to:
   detect, utilizing a sensor associated with the computer system, an attempt to establish short-range communications between a device and a short-range communications module coupled to the computer system;
   determine that no short-range communication was received by the computer system via the short-range communications module; and
   based on the detecting and determining, perform an action at the computer system.
14. The computer system of clause 13, wherein the sensor is at least one of: an image capture module, a proximity detector, or an accelerometer.
15. The computer system of clause 14, wherein the computer system is configured to detect the attempt to establish short-range communications by detecting an attempt to position the device proximate the short-range communications module.
16. The computer system of clause 2, wherein the computer system is configured to detect the attempt to establish short-range communications by detecting motion towards the computer system, motion away from the computer system, or both motion towards and motion away from the computer system.
17. The computer system of clause 16, wherein the sensor is the image capture module and the computer system is configured to detect by capturing an image at the image capture module and processing the image at the computer system.
18. The computer system of clause 13, wherein the action comprises providing a transaction failure notification.
19. The computer system of clause 13, wherein the device is a payment token and wherein the attempt to establish short-range communications corresponds to an attempt to perform a payment transaction.
20. The computer system of clause 19, wherein the action comprises providing a request to use an alternative payment mechanism.
21. The computer system of clause 13, wherein the action comprises providing directions to a location of the short-range communications module.
22. The computer system of clause 19, wherein after a threshold number of attempts to establish short-range communications are detected, the action comprises requesting use of an alternative payment mechanism.
23. The computer system of clause 19, wherein the computer system is configured to detect the attempt to establish short-range communications by detecting a type of payment token being used in the transaction attempt, and wherein the action comprises providing, by the computer system, instructions for establishing short-range communications between the payment token, the instructions differing based on the detected type of payment token.
24. The computer system of clause 13, wherein the action comprises sending a request to a payment clearinghouse to extend a transaction window.
25. A computer readable medium for storing instruction code which, when executed by a processor of a computer system, cause the computer system to:
   detect, utilizing a sensor associated with the computer system, an attempt to establish short-range communications between a device and a short-range communications module coupled to the computer system;
   determine that no short-range communication was received by the computer system via the short-range communications module; and
   based on the detecting and determining, perform an action at the computer system.

## Claims

1. A method at a computer system, the method comprising:
detecting, utilizing a sensor associated with the computer system, an attempt to establish short-range communications between a device and a short-range communications module coupled to the computer system;
determining that no short-range communication was received by the computer system via the short-range communications module; and
based on the detecting and determining, performing an action at the computer system.

2. The method of claim 1, wherein the attempt to establish short-range communications is detected by the sensor using a sensor signal and the short-range communications are established via a short-range communications signal distinct from the sensor signal.

3. The method of claim 1 or 2, wherein the sensor and the short-range communications module are distinct components.

4. The method of any of the preceding claims, wherein the short-range communications are enabled by near-field communication, NFC.

5. The method of any of the preceding claims, wherein detecting the attempt to establish short-range communications comprises detecting an attempt to position the device proximate the short-range communications module.

6. The method of any of the preceding claims, wherein the detecting the attempt to establish short-range communications comprises detecting motion towards the computer system, motion away from the computer system, or both motion towards and motion away from the computer system.

7. The method of any of the preceding claims, wherein the sensor is at least one of: an image capture module, a proximity detector, or an accelerometer.

8. The method of claim 7, wherein the sensor is the image capture module and the detecting is done by capturing an image at the image capture module and processing the image at the computer system.

9. The method of any of the preceding claims, wherein the device is a payment token and wherein the attempt to establish short-range communications corresponds to an attempt to perform a payment transaction.

10. The method of claim 9, wherein after a threshold number of attempts to establish short-range communications are detected, the action comprises requesting use of an alternative payment mechanism.

11. The method of claim 9 or claim 10, wherein the detecting the attempt to establish short-range communications further comprises detecting a type of payment token being used in the transaction attempt, and wherein the action comprises providing, by the computer system, instructions for establishing short-range communications between the payment token, the instructions differing based on the detected type of payment token.

12. The method of any of the preceding claims, wherein the action comprises one or more of:
providing a transaction failure notification;
providing a request to use an alternative payment mechanism; and
providing directions to a location of the short-range communications module.

13. The method of any of the preceding claims, wherein the action comprises sending a request to a payment clearinghouse to extend a transaction window.

14. A computer system comprising:
a processor; and
a communications subsystem,
wherein the computer system is configured to carry out the method of any of the preceding claims.

15. A computer program which when executed on a processor of a computer system is configured to carry out the method of any one of claims 1 to 13.
